**Europäisches Patentamt**

**European Patent Office**

**Office européen des brevets**

(19)

(11) Veröffentlichungsnummer: **0 158 685**

**B1**

(12)

# EUROPÄISCHE PATENTSCHRIFT

(45) Veröffentlichungstag der Patentschrift:
25.11.87

(51) Int. Cl.⁴: **A 01 B 15/14**

(21) Anmeldenummer: **84104284.9**

(22) Anmeldetag: **16.04.84**

(54) **Pflug mit einer Zugpunkt- und Schnittbreiteneinstelleinrichtung.**

(43) Veröffentlichungstag der Anmeldung:
**23.10.85 Patentblatt 85/43**

(45) Bekanntmachung des Hinweises auf die Patenterteilung:
**25.11.87 Patentblatt 87/48**

(84) Benannte Vertragsstaaten:
**FR GB**

(56) Entgegenhaltungen:
**DE-A-2 845 111**
**DE-A-3 107 137**

(73) Patentinhaber: **Rabewerk Heinrich Clausing, D-4515 Bad Essen 1 (DE)**

(72) Erfinder: **Albers, Heinrich, Rabber Nr. 32, D-4515 Bad Essen 1 (DE)**

(74) Vertreter: **Missling, Arne, Dipl.- Ing., Patentanwälte Dipl.- Ing. R. Schlee Dipl.- Ing. A. Missling Bismarckstrasse 43, D-6300 Giessen (DE)**

EP 0 158 685 B1

**Beschreibung**

Die Erfindung betrifft einen Pflug mit einer Pflugkoppel, die für den Anschluß zumindest der Unterlenker eines Dreipunktgestänges eines Schleppers ausgebildet ist und mit einem Pflugrahmen, der mit der Koppel über drei Lenker verbunden ist, von denen zumindest zwei einstellbar sind.

Aus der DE-A-28 45 111 ist ein Pflug bekannt, bei dem der Pflugrahmen mit der Pflugkoppel über zwei Lenker verbunden ist, von denen der eine längenveränderlich ausgebildet ist. Diese beiden Lenker bilden ein Gelenkviereck, das mittels eines längenveränderlichen Diagonallenkers winkelverstellbar ist. Mit dieser bekannten Vorrichtung ist die Verstellung des Zugpunktes dadurch möglich, daß der Diagonallenker in seiner Länge verändert wird. Hierdurch erreicht man eine seitliche Verlagerung des Zugpunktes. Wird der dritte Lenker verstellt, mit dem der Pflugrahmen mit der Pflugkoppel verbunden ist, so dreht sich der Pflugrahmen um den Anlenkpunkt des starr ausgebildeten ersten Lenkers, so daß der Pflug je nach Verkürzung oder Verlängerung zum Gepflügten hin oder von diesem wegverschwenkt wird. Hierdurch wird die Schnittbreite des ersten Pflugkörpers eingestellt. Da jedoch bei derartiger Schnittbreitenverstellung die Koppel gleichfalls zum Gepflügten hin verschwenkt oder von diesem weg verschwenkt wird, so wird gleichzeitig mit der Schnittbreiteneinstellung auch der Zugpunkt verstellt, was eine anschließende weitere Korrektur des Zugpunktes mit Hilfe des Diagonallenkers erfordert. Diese Vorrichtung gestattet somit entweder nur die Zugpunktverstellung oder aber die Schnittbreitenverstellung, kombiniert mit einer unerwünschten Zugpunktverstellung.

Der Erfindung liegt die Aufgabe zugrunde, eine Vorrichtung der eingangs genannten Art so auszubilden, daß mittels einer einfachen, für Beet- und Drehpflüge geeigneten Konstruktion der Vorteil beibehalten wird, daß bei einer Verstellung des Zugpunktes keine Verstellung der Schnittbreite des ersten Pflugkörpers erfolgt und daß zusätzlich bei einer Schnittbreitenverstellung der Zugpunkt nicht verstellt wird.

Diese Aufgabe wird mit den Merkmalen des kennzeichnenden Teils des Anspruches 1 gelöst.

Durch die erfindungsgemäße Anordnung der Lenker ist sichergestellt, daß die Zugpunkteinstellung wie auch die Schnittbreiteneinstellung des ersten Pflugkörpers unabhängig voneinander vorgenommen werden kann, d.h. bei einer Schnittbreitenverstellung bleibt der Zugpunkt unverändert. Durch die Anlenkung des Pflugrahmens über ein mehrgelenkiges Getriebe mit der Pflugkoppel werden für die Rahmenverstellung zwei ideelle Drehpunkte geschaffen, von denen einer in oder in der Nähe des Zugpunktes (ideeller Führungspunkt) der Unterlenker des Dreipunktgestänges liegt und der andere vor diesem Zugpunkt, wobei dieser vorteilhaft im Unendlichen liegt.

Weitere vorteilhafte Ausgestaltungen der Erfindung gehen aus den Unteransprüchen in Verbindung mit Zeichnung und Beschreibung hervor.

Drei Ausführungsbeispiele der Erfindung sind im folgenden anhand der Zeichnung näher beschrieben, in dieser zeigen:

Fig. 1 eine Draufsicht auf einen erfindungsgemäßen Pflug, bei dem der nicht längenveränderbare Lenker neben den längenveränderbaren Lenkern liegt,

Fig. 2 ein weiteres Ausführungsbeispiel der Erfindung, bei dem der nicht längenveränderbare Lenker zwischen den beiden längenveränderbaren Lenkern liegt und

Fig. 3 ein weiteres Ausführungsbeispiel der Erfindung, bei dem die längenveränderbaren Lenker mit Winkelhebeln kombiniert sind.

Der in den Zeichnungen dargestellte Pflug 1 weist eine Koppel 2 auf, die mit den Unterlenkern 3, 4 eines Dreipunktgestänges eines Schleppers 5 verbunden ist. In der Koppel 2 ist ein Drehlager 6 für den Pflug 1 angebracht, das zum Wenden der Pflugkörper 7 von der einen in die andere Arbeitsstellung dient.

Der Pflugrahmen 8 des Pfluges 1 trägt zum einen die Pflugkörper 7 und hat zum anderen eine Konsole 9, die über drei Lenker 10, 11 und 12 mit einem am Drehlager 6 befestigten Arm 13 verbunden ist. Der erste Lenker 12 ist nicht längenveränderbar ausgebildet und überträgt die Hauptzugkräfte. Der Lenker 12 ist in den Gelenkpunkten 14 und 15 an der Konsole 9 bzw. am Arm 13 des Drehlagers 6 angeschlossen. Die beiden anderen Lenker 10 und 11 sind jeweils längenveränderlich ausgebildet und in den Gelenkpunkten 16, 17 bzw. 18 und 19 am Drehlager 6 bzw. an der Konsole 9 angeschlossen.

Der durch die Unterlenker 3, 4 gebildete Zugpunkt liegt im Schnittpunkt 20 der Verlängerungen der beiden Unterlenker 3, 4. Der erste Lenker 12 ist am Pflugrahmen 8 wie auch an der Konsole 9 so angeordnet, daß die Verlängerung seiner beiden Anlenkpunkte 14 und 15 durch oder angenähert durch den Zugpunkt 20 verläuft. Der dritte Lenker 10 weist gleichfalls eine solche Lage auf, daß die Verlängerung seiner beiden Anlenkpunkte 18 und 19 gleichfalls durch oder angenähert durch den Zugpunkt 20 verläuft. Der zweite Lenker 11, der gleichfalls längenverstellbar ausgebildet ist, ist vorteilhaft parallel zum ersten Lenker 12 angeordnet, so daß der Schnittpunkt der Verlängerungen dieser beiden Lenker sich im Unendlichen schneidet. Dieser zweite Lenker 11 kann jedoch auch mit seinem Anlenkpunkt 17 etwas zum Lenker 12 hin verschoben sein, so daß sich die beiden Verlängerungen der Lenker im Bereich zwischen dem Zugpunkt 20 und dem Unendlichen schneiden.

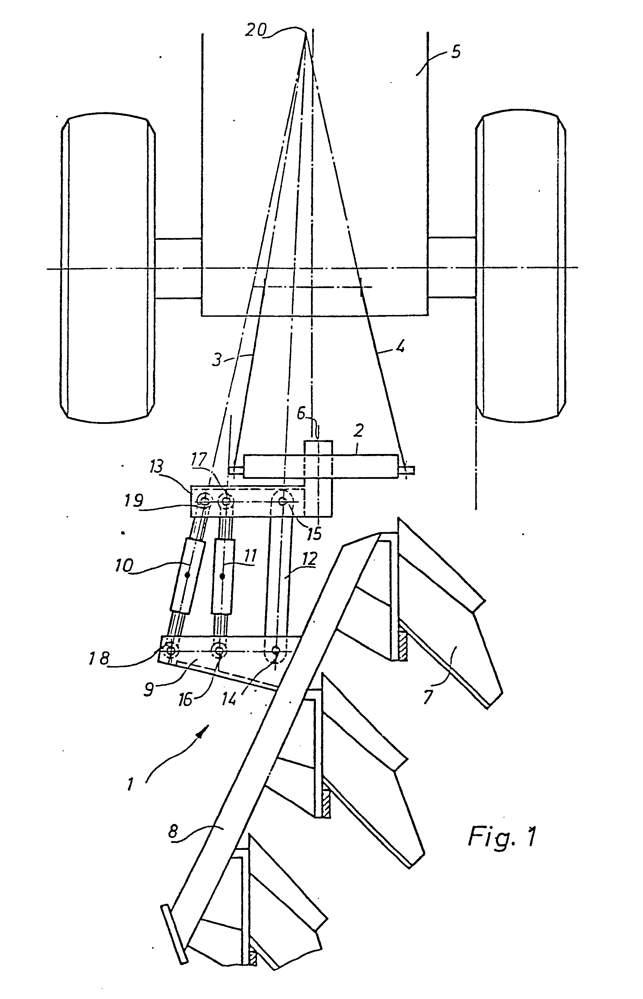

Wird in Fig. 1 der Lenker 10 in seiner Länge verändert, so wird der Pflugrahmen 8 seitlich parallel zur Koppel 2 verschwenkt, da der Pflugrahmen 8 mit der Koppel 2 über ein Viergelenk verbunden ist, das durch die beiden Lenker 11 und 12 gebildet ist.

Wird in Fig. 1 der Lenker 11 verstellt, so erfolgt nur ein seitliches Verschwenken der Koppel 2 und ein gegensinniges Verschwenken des ideellen Zugpunktes 20. Die Schnittbreite des ersten Pflugkörpers 7 wird dabei nicht verändert. Der Grund hierfür liegt darin, daß diese Lenker relativ zum Pflugrahmen und zur Koppel so angeordnet sind, daß sich deren Verlängerungen im Zugpunkt 20 schneiden. Durch die besondere Anordnung der Lenker ist somit sichergestellt, daß nur eine Schnittbreitenverstellung bei einer Verstellung des Lenkers 10 und nur eine Zugpunktverstellung bei Veränderung der Länge des Lenkers 11 erfolgt. Die erfindungsgemäße Vorrichtung ermöglicht es somit, mit einfachen Mitteln entweder nur die Schnittbreite des ersten Pflugkörpers oder aber nur den Zugpunkt zu verstellen.

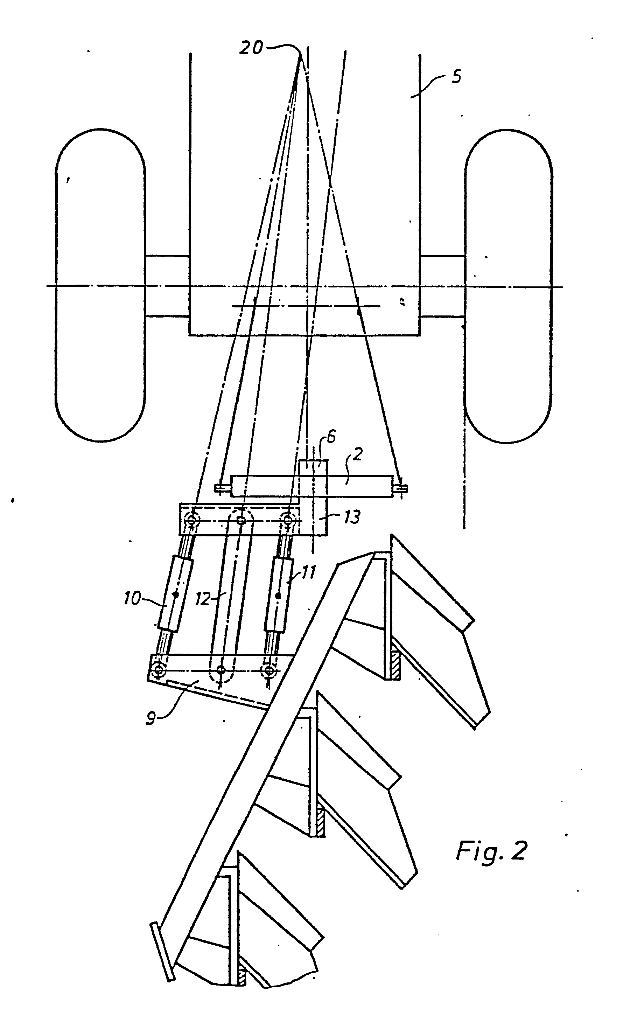

Bei dem in Fig. 2 dargestellten Ausführungsbeispiel ist die Lage der Lenker 11 und 12 relativ zum Lenker 10 vertauscht worden. Auch hier ist der Lenker 12 so angeordnet, daß dessen Verlängerung durch den Zugpunkt 20 verläuft, während der Lenker 11 zum Lenker 12 parallel liegend angeordnet ist. Hierdurch überträgt auch der Lenker 12 die Hauptkräfte. Der Lenker 10 wiederum ist zum Lenker 12 derart geneigt, daß dessen Verlängerung durch den Zugpunkt 20 verläuft. Die Einstellung des Zugpunktes wie auch der Schnittbreite erfolgt hier analog dem Ausführungsbeispiel in Fig. 1.

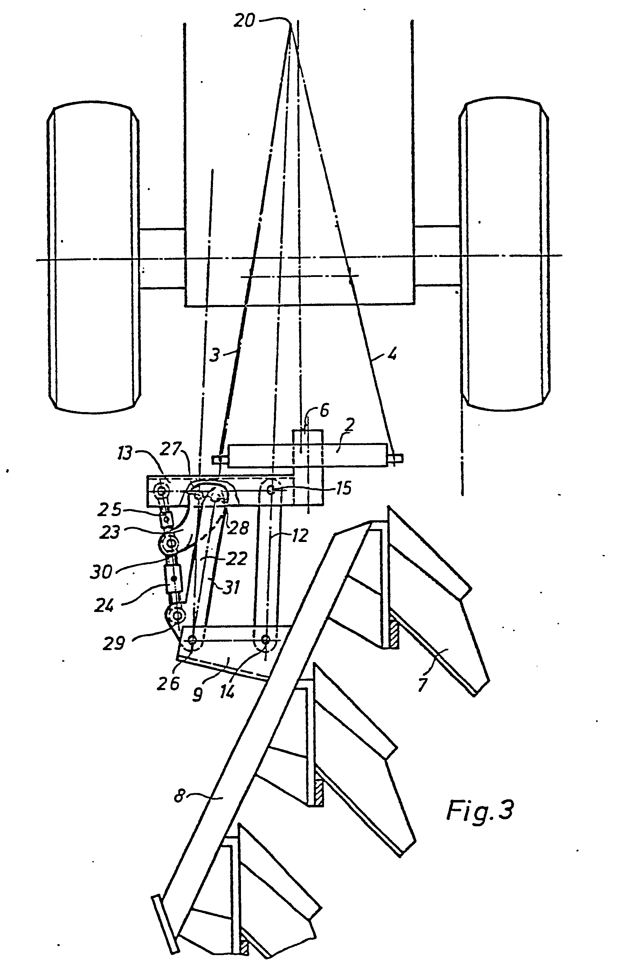

Bei dem in Fig. 3 dargestellten Ausführungsbeispiel sind gleiche Teile mit gleichen Bezugszeichen versehen. Der Pflugrahmen 8 ist wieder über einen Hauptlenker 12 mit der Pflugkoppel 2 verbunden, der so ausgerichtet ist, daß dessen Verlängerung durch den Zugpunkt 20 verläuft, der durch die Unterlenker 3, 4 bestimmt ist. Die beiden Lenker 10 und 11 gemäß den Ausführungbeispielen nach Fig. 1 und 2 sind durch zwei Winkelhebel 22, 23 sowie zwei verstellbaren Lenkern 24 und 25 ersetzt worden. Der Winkelhebel 22 ist im Punkt 26 an der Konsole 9 des Pflugrahmens 8 angelenkt. Der Winkelhebel 23 ist im Punkt 27 am Arm 13 der Pflugkoppel 2 angelenkt. Beide Winkelhebel 22, 23 sind gelenkig im Punkt 28 miteinander verbunden. Die beiden freien Arme 29 und 30 der Winkelhebel 22 und 23 sind über einen verstellbaren Lenker 24 miteinander verbunden. Der Arm 30 des Winkelhebels 23 ist wiederum über einen weiteren verstellbaren Lenker mit dem Arm 13 der Pflugkoppel 2 verbunden, so daß hierdurch der Anlenkpunkt 28 der beiden Winkelhebel relativ zum Pflugrahmen und zur Pflugkoppel fixiert wird. Der Arm 31 des Winkelhebels 22 bildet mit seinen beiden Anlenkpunkten 26 und 28 einen Lenker, dessen Verlängerung durch den Zugpunkt 20 verläuft. Dieser Arm 31 entspricht somit dem Lenker 10 gemäß den Ausführungsbeispielen nach Fig. 1 und 2. Der den Lenker 11 in dem Ausführungsbeispiel nach Fig. 1 und 2 entsprechende Hebel wird durch den Winkelhebel 22 und den Winkelhebel 23, und zwar durch deren Anlenkpunkte 26 und 27 gebildet. Diese Anlenkpunkte liegen derart zum Lenker 12, daß die Verlängerung durch diese beiden Anlenkpunkte parallel zu denen des Lenkers 12 verläuft, so daß der Schnittpunkt vorteilhaft im Unendlichen liegt. Eine Veränderung des Lenkers 25 in Fig. 3 entspricht einer Verstellung des Lenkers 10 in Fig. 1, so daß hierdurch die Schnittbreite des Pfluges verstellt wird, ohne daß sich eine Verstellung des Zugpunktes einstellt. Soll der Zugpunkt verstellt werden, so wird der verstellbare Lenker 24 in seiner Länge verändert, so daß hierdurch nur eine Verstellung des Zugpunktes 20 und keine Schnittbreitenverstellung eintritt.

Der gemeinsame Gelenkpunkt 28 der Winkelhebel 22, 23 ist so angeordnet, daß die Verbindungslinien 27, 28 und 26, 28 des Gelenkpunktes und der Anlenkpunkte der Winkelhebel einen rechten Winkel oder annähernd einen rechten Winkel einschließen.

Das Ausführungsbeispiel nach Fig. 3 ist zwar mechanisch etwas aufwendiger als diejenigen nach den Fig. 1 und 2, jedoch können durch diese Konstruktion die auf die verstellbaren Lenker einwirkenden Kräfte gering gehalten werden, so daß diese weniger stark dimensioniert zu werden brauchen.

**Patentansprüche**

1. Pflug mit einer Pflugkoppel (2), die für den Anschluß zumindest der Unterlenker (3, 4) eines Dreipunktgestänges eines Schleppers (5) ausgebildet ist und mit einem Pflugrahmen (8), der mit der Pflugkoppel (2) über drei Lenker (12; 10 bzw. 22; 11 bzw. 22 - 25) verbunden ist, von denen zumindest zwei Lenker (10; 11 bzw. 22 - 25) zur Veränderung der Lage von Pflugrahmen (8) und Pflugkoppel (2) einstellbar sind und der erste Lenker (12) wie auch der dritte Lenker (10; 22) derart zueinander angeordnet sind, daß die Verlängerung der Verbindungslinien ihrer jeweiligen Anlenkpunkte (14, 15; 19, 18; 26, 28) sich in oder annähernd im Zugpunkt (20) schneiden, dadurch gekennzeichnet, daß die Verbindungslinien der Anlenkpunkte (14, 15) des ersten Lenkers (12) und die Anlenkpunkte (16, 17; 26, 27) des zweiten Lenkers (11; 22 - 25) entweder parallel oder derart annähernd parallel zueinanderliegend angeordnet sind, daß sich die Verlängerungen der Verbindungslinien ihrer Anlenkpunkte in einem Bereich schneiden, der weit vor dem durch die Unterlenker (3, 4) definierten Zugpunkt (20) liegt.

2. Pflug nach Anspruch 1, dadurch gekennzeichnet, daß der erste nicht längenverstellbar ausgebildete Lenker (12) stärker als die übrigen Lenker dimensioniert ist.

3. Pflug nach Anspruch 1 oder 2, dadurch gekennzeichnet, daß der zweite und dritte Lenker durch zwei in einem gemeinsamen Gelenkpunkt (28) gelenkig miteinander verbundene Winkelhebel (22, 23) gebildet sind, die einerseits mit dem Pflugrahmen (8, 9) und andererseits mit der Pflugkoppel (2, 13) verbunden sind, daß die freien Arme (29, 30) der Winkelhebel (22, 23) über einen verstellbaren Lenker (24) miteinander verbunden sind und daß der gemeinsame Gelenkpunkt (28) der beiden Winkelhebel (22, 23) durch einen weiteren verstellbaren Lenker (25) in seiner Lage relativ zur Pflugkoppel (2) und zum Pflugrahmen (8) festgelegt ist.

4. Pflug nach Anspruch 3, dadurch gekennzeichnet, daß der Lenker (25) am Arm (30) des Winkelhebels (23) und am Arm (13) über Pflugkoppel (2) angreift.

5. Pflug nach Anspruch 4, dadurch gekennzeichnet, daß der gemeinsame Gelenkpunkt (28) der Winkelhebel (22, 23) so angeordnet ist, daß die Verbindungslinien (27, 28 und 26, 28) des Gelenkpunktes und der Anlenkpunkte der Winkelhebel einen rechten Winkel oder annähernd einen rechten Winkel einschließen.

## Claims

1. A plough having a plough coupler (2) which is designed for connection to at least the lower connecting rods (3, 4) of a three-point rod arrangement of a tractor (5), and having a plough frame (8), which is connected to the plough coupler (2) via three connecting rods (12; 10 or 22; 11 or 22-25), of which at least two connecting rods (10; 11 or 22-25) are adjustable for altering the position of the plough frame (8) and plough coupler (2) and in which the first connecting rod (12) and the third connecting rod (10; 22) are so disposed with respect to one another that the extension of the connection lines of their respective coupling points (14, 15; 19, 18; 26, 28) intersect at or near the point of traction (20), characterised in that the connection lines of the coupling points (14, 15) of the first connecting rod (12) and the coupling points (16, 17; 26, 27) of the second coupling rod (11; 22-25) are arranged either parallel to one another or are arranged so nearly parallel to one another that the extensions of the connection lines of their coupling points intersect in an area far in front of the traction point defined by the lower connecting rods (3, 4).

2. A plough according to claim 1, characterised in that the first connecting rod (12) is not designed to be longitudinally adjustable and is larger than the other connecting rods.

3. A plough according to claim 1 or 2, characterised in that:
the second and third connecting rods are formed by two angle levers (22, 23) which are pivotably connected to one another at a common pivotal point (28) and which are connected to the plough frame (8, 9) and the plough coupler (2, 13) respectively;
in that the free arms (29, 30) of the angle levers (22, 23) are connected together via an adjustable connecting rod (24); and
in that the common pivotal point (28) of the two angle levers (22, 23) is fixed in place relative to the plough coupler (2) and the plough frame (8) by means of a further adjustable connecting rod (25).

4. A plough according to claim 3, characterised in that the coupler (25) engages the arm (30) of the angle lever (23) and an arm (13) of the plough coupler (2).

5. A plough according to claim 4, characterised in that the common pivotal point (28) of the angle lever (22, 23) is arranged in such a way that the connection lines (27, 28 and 26, 28) of the pivotal point and of the coupling points of the angle lever form a right angle or an approximate right angle.

## Revendications

1. Charrue comprenant un organe d'accouplement (2) de la charrue, qui est adapté au raccordement d'au moins les barres inférieures (3, 4) d'une fixation à trois points d'un tracteur (5) et un châssis (8), lequel est relié à l'organe d'accouplement (2) par l'intermédiaire de trois barres pivotantes (12; 10 ou 22; 11 ou 22 à 25), dont deux au moins (10; 11 ou 22 à 25) sont réglables pour modifier la position du châssis (8) et de l'organe d'accouplement, et dont la première barre (12) ainsi que la troisième (10; 22) sont disposées l'une par rapport à l'autre de façon que les prolongements des droites reliant leurs points d'articulation respectifs (14, 15; 19, 18; 26, 28) se coupent au centre de traction (20) ou en son voisinage, ladite charrue étant caractérisée en ce que la droite reliant les points d'articulation (14, 15) de la première barre (12) et la droite reliant les points d'articulation (16, 17; 26, 27) de la deuxième barre (11; 22 à 25) sont disposées parallèlement, ou à peu près parallèlement, de façon que les prolongements des droites de jonction de leurs points d'articulation se coupent dans une région située à grande distance en avant du centre de traction (20) défini par les barres inférieures (3, 4).

2. Charrue selon la revendication 1, caractérisée en ce que la première barre (12), non réglable en longueur, est plus longue que les autres.

3. Charrue selon la revendication 1 ou 2, caractérisée en ce que la deuxième barre et la troisième sont constituées par deux leviers coudés (22, 23) articulés l'un à l'autre en un point charnière commun, ces leviers coudés étant reliés d'une part au châssis (8, 9) et d'autre part à l'organe d'accouplement (2, 13), en ce que les bras libres (29, 30) des leviers coudés (22, 23) sont reliés l'un à l'autre par une biellette réglable (24), et en ce que le point d'articulation commun (28) des deux leviers coudés (22, 23) est fixé par une autre biellette réglable (25), dans sa position par rapport à l'organe d'accouplement (2) et au châssis de la charrue (8).

4. Charrue selon la revendication 3, caractèrisée en ce que la biellette (25) est reliée au bras (30) du levier coudé (23) et au bras (13) de l'organe d'accouplement.

5. Charrue selon la revendication 4, caractérisée en ce que le point d'articulation commun (28) des leviers coudés (22, 23) est disposé de façon que les droites (27-28 et 26-28) reliant ledit point d'articulation et les autres points d'articulation des leviers coudés font entre elles un angle droit, au moins sensiblement.

Fig. 1

Fig. 2

Fig.3